# EUROPEAN PATENT SPECIFICATION

(11) **EP 2 916 596 B1**
(45) Date of publication and mention of the grant of the patent: **09.08.2017**
(21) Application number: 14157776.7
(22) Date of filing: 05.03.2014
(51) Int. Cl.: H04W 52/02

(54) **Reducing power consumption of a small cell base station**
Verringerung des Stromverbrauchs einer kleinzelligen Basisstation
Réduction de la consommation d'énergie d'une station de base à petites cellules

(43) Date of publication of application: 09.09.2015
(73) Proprietor: FUJITSU LIMITED, Kawasaki-shi, Kanagawa 211-8588 (JP)
(72) Inventor: Hunukumbure, Rajaguru Mudiyanselage Mythri, Hillingdon, Middlesex UB8 3WF (GB); Vadgama, Sunil Keshavji, Ashford, Middlesex TW15 3RD (GB)
(74) Representative: Schultes, Stephan

(56) References cited:
- WO-A1-2013/000110
- IMRAN ASHRAF ET AL: "Improving Energy Efficiency of Femtocell Base Stations Via User Activity Detection", WIRELESS COMMUNICATIONS AND NETWORKING CONFERENCE (WCNC), 2010 IEEE, IEEE, PISCATAWAY, NJ, USA, 18 April 2010 (2010-04-18), pages 1-5, XP031706720, ISBN: 978-1-4244-6396-1

## Description

### Field of the Invention

Embodiments disclosed herein relate to reducing power consumption of a small cell base station when it is not serving any active mobile stations.

### Background of the Invention

Wireless communications networks are widely known in which base stations (BSs) communicate with mobile stations (also called user equipments, UEs, subscriber or mobile terminals) within range of the BSs. The geographical area covered by one or more base stations is generally referred to as a cell, and typically many BSs are provided in appropriate locations so as to form a network or system covering a wide geographical area more or less seamlessly with adjacent and/or overlapping cells. (In this specification, the terms "system" and "network" are used synonymously except where the context requires otherwise). Base stations can provide coverage in relatively large geographical areas and the corresponding cells are often referred to as "macrocells". It is possible to establish smaller sized cells within a macrocell, and such cells are variously referred to as microcells, picocells, or femtocells. Herein, the term "small cell" is generally used for cells that are smaller than macrocells. The corresponding base stations are referred to herein as "macrocell base stations" and "small cell base stations" respectively.

The small cell base station concept has been applied in the context of different radio access technologies. In the Long Term Evolution (LTE) set of standards, for example, it is referred to by the name of Home eNB (or HeNB). Home eNBs are much like WiFi routers, as they are deployed (plug and play) by the user, draw power from the home electricity grid and use broadband Internet Protocol connections, such as Digital Subscriber Line (DSL) or Advanced Digital Subscriber Line (ADSL) links, for "backhaul". HeNBs can be connected via HeNB gateways to, for example, a Universal Mobile Telecommunications System (UMTS) core network, for example each gateway may be connected to a UMTS Mobile Switching Centre (MSC) and hence a Signalling Gateway Support Node (SGSN).

Small cell base stations are intended primarily for users belonging to a particular home or office. They can be private ("closed") access or public ("open") access. In private access small cell base stations, access is restricted to only registered users (also referred to as a "closed subscriber group" or CSG), for example family members or particular groups of employees. In public access small cell base stations, other users may also use the small cell base station, subject to certain restrictions to protect the Quality of Service (QoS) received by registered users.

Small cell base stations tend to be powered on most of the time, while the registered mobile stations are served only a fraction of the time. This operation wastes electrical power as well as radiates unused EMF. Ashraf, I., Ho, L.T.W., and Claussen, H., "Improving Energy Efficiency of Femtocell Base Stations via User Activity Detection", Proceedings of the IEEE WCNC, Sydney Australia, April 2010, describes an energy saving procedure in which a femtocell base station disables its pilot transmissions and associated radio processing when no active calls are being made by users in the vicinity. This is achieved by providing a low power "sniffer" receiver in the femtocell base station that enables detection of an active call between a macrocell base station and a mobile station. However, this requires the sniffer receiver to be powered on. Furthermore, the QoS provided by the macrocell base station to the mobile station before handover to the femtocell base station is suboptimal.

PCT application WO 2013/000110 discloses a wireless device, including a main circuit, a power supply, a RF energy harvest component and an electronic power switch, wherein: the RF energy harvest component harvests electronic power from external RF signals so as to trigger the electronic power switch to connect or disconnect the line between the main circuit and the power supply by using the harvested electronic power.

Accordingly, it would be desirable to provide improved methods and means for reducing power consumption of small cell base stations.

### Summary of Embodiments of the invention

One embodiment provides a method of reducing power consumption of a small cell base station that is integrated into a wireless communications network, the small cell base station associated with a closed group of mobile stations and located in a coverage area of a macrocell base station of the wireless communications network, the method comprising: transmitting, by the small cell base station to the wireless communications network, status information indicating that the small cell base station is to enter a sleep mode in which no power is consumed, the small cell base station entering the sleep mode either when no mobile stations of the closed group are located in a coverage area of the small cell base station or when all mobile stations of the closed group that are located in the coverage area of the small cell base station are in an idle mode; and during an attempt by one of the mobile stations to access the wireless communications network involving the macrocell base station and occurring while the small cell base station is in the sleep mode: determining, by the wireless communications network, that the mobile station is in the coverage area of the small cell base station, delaying, by the wireless communications network, the access attempt, and harvesting, by the small cell base station, radio frequency, RF, energy from one or more signals transmitted by the mobile station during the access attempt, the harvested RF energy triggering a wake-up procedure of the small cell base station in order for access to the wireless communications network to be granted to the mobile station via the small cell base station.

The method, therefore, provides a mechanism to let the small cell base station enter a state of reduced (e.g., zero or near-zero) power consumption, that is "sleep mode", when there are no registered mobile stations using it, and to "wake up" the small cell base station from this state when one of the registered mobile stations that is in its vicinity (coverage area) requires access to the wireless communications network. Here, the wireless communications network (that is, the macrocell base station and/or a core network entity such as a Mobility Management Entity in the case of LTE) facilitates the wake up of the small cell base station by the purposeful delay of the access attempt. As used herein the term "access attempt" refers to a process (e.g., a signalling process) in which a mobile station interacts (e.g., communicates) with the wireless communications network in order to use services provided by the wireless communications network. The time period of the delay can be of the order of, for example, three or four seconds, which ensures that mobile station users do not see any significant delay in network access. Determining that the mobile station is in the coverage area of the small cell base station can be based on location information associated with the mobile station, such as a location update transmitted by the mobile station. Advantageously, it is expected that no changes to the normal functions of the mobile station are required.

The access attempt can correspond to a transition at the mobile station from the idle mode to an active mode. As used herein the term "idle mode" means that the mobile station is not communicating user related data, voice or messaging with the network, while the term "active mode" means that the mobile station is communicating user related data, voice or messaging with the network. For example, the idle mode can be the RRC Idle mode in LTE and the active mode can be the RRC Connected mode in LTE. Thus, it is possible for the mobile station to 'directly' connect to the small cell base station in the active mode without previously being connected to the macrocell base station, i.e., no handover is involved. This reduces the load on the wider wireless communications network (e.g., macrocell communications network or other wireless wide-area network).

The access attempt (e.g., RRC connection establishment procedure) can be triggered by either the mobile station or the wireless communications network. For example, the mobile station can trigger the access attempt if the end-user starts an application to browse the Internet. The wireless communications network can trigger the access attempt by sending a paging message. For example, this can be to allow the delivery of an incoming SMS or notification of an incoming voice call.

The access attempt can include a request for resources. Thus, the access attempt can be a Random Access Channel (RACH) procedure for requesting resource allocation from the macrocell base station. The delay caused by the wireless communications network can force the mobile station to make repeated requests. Accordingly, delaying the access attempt can comprise denying, by the wireless communications network, a transmitted and subsequently retransmitted request for resources (e.g., RACH signalling) made by the mobile station. The retransmitted request can be at a higher power level compared to the previously transmitted request. In this way, a threshold level of harvested RF energy for triggering the wake-up procedure can be set such that the request with the higher power level triggers the wake-up procedure. Alternatively, the threshold level can be set so that the RF energy from a plurality of requests that are (re)transmitted at substantially the same power level trigger the wake-up procedure. In either case, setting a threshold level minimizes the chance of unintentionally triggering the wake up procedure of the small cell base station when it is not required.

The wake-up process can be a fast wake-up process, for example related to software defined network where the network retains the baseband processing and the small cell base station is simply an RF transmitter similar to an active distributed antenna. The network can allocate some processing power and memory to a particular small cell base station ID when needed. In such a case, the wake-up can only involve the RF part where having small power amplifiers is advantageous.

One embodiment provides a wireless communications system, comprising: a macrocell base station of a wireless communications network; and a small cell base station that is integrated into the wireless communications network, the small cell base station associated with a closed group of mobile stations and located in a coverage area of the macrocell base station, wherein the small cell base station is configured to: transmit, to the wireless communications network, status information indicating that the small cell base station is to enter a sleep mode in which no power is consumed, the small cell base station configured to enter the sleep mode either when no mobile stations of the closed group are located in a coverage area of the small cell base station or when all mobile stations of the closed group that are located in the coverage area of the small cell base station are in an idle mode, while in the sleep mode, harvest radio frequency, RF, energy from one or more signals transmitted by one of the mobile stations that is in the coverage area of the small cell base station, the one or more signals relating to an attempt by the mobile station to access the wireless communications network that involves the macrocell base station, and wake up from the sleep mode in response to the harvested RF energy.

One embodiment provides a small cell base station a small cell base station configured to be integrated into a wireless communications network in a coverage area of a macrocell base station of the wireless communications network, and configured to be associated with a closed group of mobile stations, the small cell base station comprising: a transmitter configured to transmit, to the wireless communications network, status information indicating that the small cell base station is to enter a sleep mode in which no power is consumed, the small cell base station configured to enter the sleep mode either when no mobile stations of the closed group are located in a coverage area of the small cell base station or when all mobile stations of the closed group that are located in the coverage area of the small cell base station are in an idle mode; and a passive radio frequency, RF, energy harvesting sensor configured to, while in the sleep mode, harvest RF energy from one or more signals transmitted by one of the mobile stations that is in the coverage area of the small cell base station, the one or more signals relating to an attempt by the mobile station to access the wireless communications network that involves the macrocell base station, and output a signal configured to trigger a wake-up procedure of the small cell base station.

The provision of a passive sensor (i.e., a sensor that requires no external wiring or battery to provide power) at the small cell base station enables the small cell base station to be completely powered down.

Embodiments may be implemented in hardware, firmware, software, or any combination thereof. Embodiments may also be implemented as instructions stored on one or more non-transitory, computer-readable media, which may be read and executed by one or more processors and/or controllers. A non-transitory, computer-readable medium may include any tangible mechanism for storing or transmitting information in a form readable by a computer (e.g., a computing device). For example, non-transitory, computer-readable media may include read only memory (ROM), random access memory (RAM), magnetic disk storage media, optical storage media, flash memory devices, and others. Alternatively, the computer-readable medium could be in the form of a signal such as a downloadable data signal provided from an Internet website.

Further embodiments, features, and advantages of the invention, as well as the structure and operation of the various embodiments of the invention are described in detail below with reference to accompanying drawings.

### Brief Description of the Drawings

Specific embodiments are described below with reference to the accompanying drawings, which are provided by way of example only and in which:
Figure 1 schematically illustrates a network environment in which embodiments of the present invention can be implemented;
Figure 2 is a flow diagram of a method of reducing power consumption of a small cell base station, according to an embodiment;
Figure 3 schematically illustrates some of the signals associated with an access attempt triggered by the mobile station and occurring while the small cell base station is in a sleep mode, according to an embodiment;
Figure 4 schematically illustrates some of the signals associated with an access attempt triggered by the wireless communications network and occurring while the small cell base station is in a sleep mode, according to an embodiment; and
Figure 5 is a block diagram of a small cell base station according to an embodiment.

### Detailed Description of Embodiments of the Invention

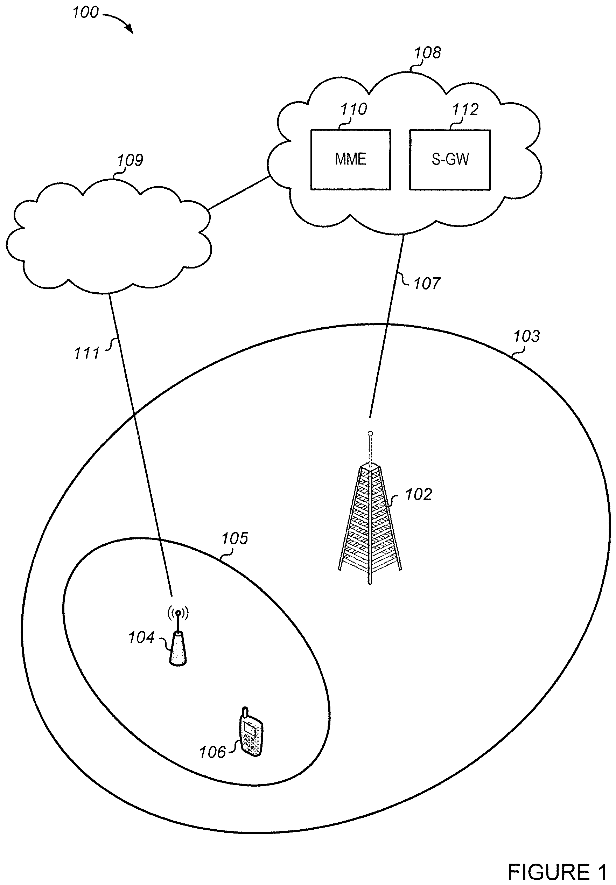

Figure 1 schematically illustrates a network environment 100 in which embodiments of the present invention can be implemented. In this particular example, the network environment 100 includes an evolved UMTS Terrestrial Radio Access Network (E-UTRAN) (also often referred to as the 3GPP work item on the Long Term Evolution or LTE for short) consisting of eNodeBs (eNBs) such as Macro eNB 102, which provide E-UTRA user plane (PDCP/RLC/MAC/PHY) and control plane (RRC) protocol terminations toward user equipments (UEs), and an Evolved Packet Core (EPC) 108. The Macro eNB 102 is connected by means of the S1 interface to the EPC 108, and more specifically to a Mobility Management Entity (MME) 110 by means of the S1-MME interface and to a Serving Gateway (SGW) 112 by means of the S1-U interface. The S1 and S1-U interfaces are denoted by reference 107.

Deployment of a small cell base station 104, here a home eNB (HeNB), in the network environment 100 is also shown in Figure 1. HeNBs are typically deployed by users at more or less random locations (from the network operator's perspective). They rely on the users' fixed broadband for backhaul and are often associated with a closed subscriber group (CSG), where access is limited to specific users or stations that are part of the CSG. Typically, the HeNB 104 automatically integrates itself into the existing "underlay" of a network and therefore has underlying Macro-cell coverage from Macro eNB 102 (i.e., the operator's network). The large ellipse 103 represents the coverage area ("macrocell") of the Macro eNB 102, while the smaller ellipse 105 represents the coverage area ("small cell") of the HeNB 104. The HeNB 104 interconnects with the EPC 108 over the Internet 109 via a wired or wireless connection. Similar to the Macro eNB 102, the HeNB 104 is connected to the MME 110 by means of the S1-MME interface and to the SGW 112 by means of the S1-U interface. The HeNB 104 can be connected directly to the MME 110 / S-GW 112. Similar to the eNB 102, the HeNB 104 interconnects with the LTE EPC 108 via the S1 interface. An optional Home eNB Gateway (HeNB-GW) may be used to establish the S1 interface. Thus, for the control plane, the S1-MME interface from the HeNB 104 may be terminated at the HeNB-GW, or a direct connection between the HeNB 104 and the MME 110 may be established. For the user plane, the S1-U interface from the HeNB 104 may be terminated at the HeNB-GW, or a direct connection between the HeNB 104 and the S-GW 112 may be established. The S1 and S1-U interfaces are denoted by reference 111.

A mobile station 106, which generally refers to various devices with wireless telecommunications capabilities such as a smart phone, PDA, laptop, and the like, is able to connect to the Macro eNB 102 or the HeNB 104, depending on location or the existence of subscription in the case of the small cell BS 104. In LTE, for example, a mobile station (referred to as a user equipment or UE) can be in one of two Radio Resource Control (RRC) states: an idle mode (RRC_IDLE) or a connected mode (RRC_CONNECTED). A UE transitions from idle mode to connected mode when an RRC connection is successfully established. A UE can move back from connected mode to idle mode by releasing the RRC connection.

An embodiment of reducing power consumption at a small cell base station in the coverage area of a macrocell base station will now be described, in which RF energy of signals transmitted by a mobile station in close proximity to the small cell base station are used to trigger a wake-up process of the small cell base station. In this particular embodiment, the small cell base station is a HeNB, the macrocell base station is a Macro eNB, the mobile station is a UE, and the RF energy of a random access channel (RACH) signal is used as the trigger signal, but it will be understood that the concepts are equally applicable to other radio technologies. Here, the RACH signal can be used by the UE in attempting uplink connections as well as when responding to a paging request by the network in the downlink. In order to distinguish from a RACH attempt of a non-CSG UE, the network purposely delays granting RACH access. The UE repeats the RACH attempt with higher signal power. The incrementing pattern of the RACH signal RF energy can be used by RF energy harvesting circuitry at the HeNB to trigger the wake-up process.

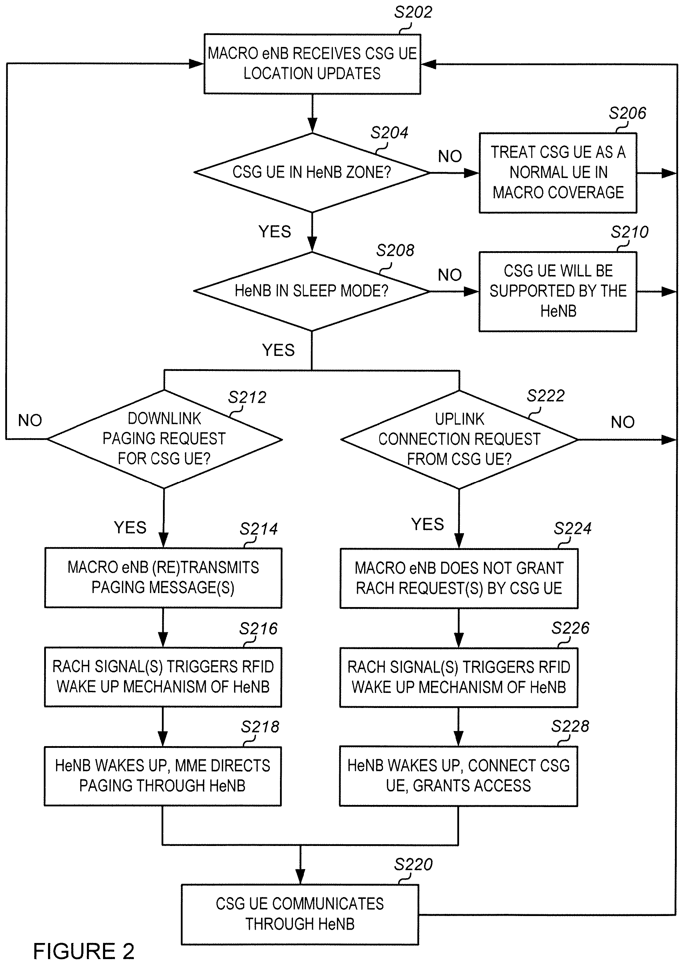

Referring now to Figure 2, once the HeNB 104 registers with the network 108, the network 108 can provide to the Macro eNB 102 the location of the HeNB 104 and the identifiers (IDs) of UEs 106 that make up the closed subscriber group (CSG) for the HeNB 104. When all the CSG UEs are idle, or out of range of the HeNB 104, the HeNB 104 enters a 'complete' sleep mode (i.e., powers off completely) after notifying the network 108 over the backhail. In turn, the network 108 can notify the Macro eNB 102. CSG UEs in idle mode would normally connect to the Macro eNB 102 when the HeNB 104 is sleeping. However, it can be desirable to wake up the sleeping HeNB 104 when it is required.

At step S202, the Macro eNB 102 receives location information allowing the Macro eNB 102 to determine when CSG UEs are within range of a sleeping HeNB 104. When a CSG UE is out of range of the HeNB 104 (NO at step S204), the Macro eNB treats the CSG UE as any normal UE within its coverage area (step S206). Similarly, when a CSG UE 106 is in range of an awake HeNB 104 (YES at step S204 and NO in step S208), the HeNB 104 treats that UE as any other CSG UE within its coverage area (step S210). However, when a CSG UE 106 is in the coverage of the sleeping HeNB 104 (YES at steps S204 and S208) the CSG UE 106 is handled differently. This is discussed below in the context of 1) a connection procedure initiated by the wireless communications network; and 2) a connection procedure initiated by the CSG UE.

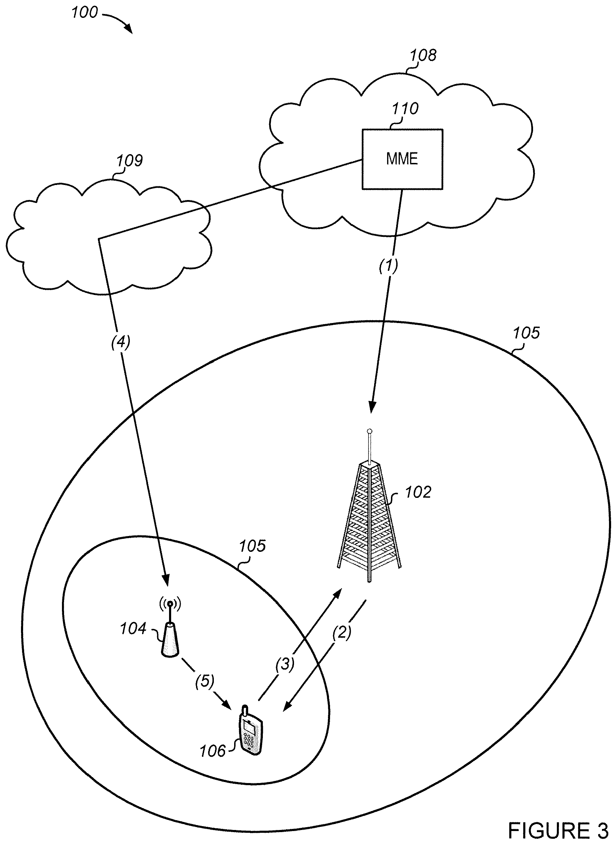

Referring now also to Figure 3, where an access attempt is triggered by the wireless communications network, when the Macro eNB 104 receives a paging request message (1) from the MME 110 for an idle CSG UE 106 while the HeNB 104 is in sleep mode (YES at step S212), the Macro eNB 102 transmits a paging message (2) to the CSG UE 106 (step S214). The CSG UE 106 then attempts to acquire radio resources through a random access channel (RACH) process, in response to the paging message (2). The Macro eNB does not grant RACH access at the first attempt, making the CSG UE 106 repeat the RACH with incremented power. This RACH signalling (3) is sensed by the HeNB 104 and triggers a wake-up procedure (step S216). More specifically, RF energy from the paging response (3) is harvested by an RF energy harvesting module at the HeNB 104. Typically, an RF harvesting module generates RF energy (converts RF into DC), stores the electrical energy, and outputs a signal, for example to trigger the wake up procedure of the small cell base station, when the stored electrical energy exceeds a threshold. A datasheet of an exemplary 915MHz RF power harvester receiver is available at http://www.mouser.com/ds/2/329/P2110-datasheet-1690.pdf. Since the CSG UE 106 is in coverage (i.e., in the vicinity) of the HeNB 106 when the paging response (3) is transmitted, the RF power would be above certain threshold to trigger the RF energy harvesting sensor. Meanwhile, the Macro eNB 102 delays the connection establishment procedure by not passing the paging response to the MME 110. Upon waking up from sleep mode, the HeNB 104 receives a paging request message (4) from the MME 110 and transmits a paging message (5) to the UE 106 (step S218). The CSG UE 106 then connects to the network 108 through the HeNB 104 (step S220), since the paging message (5) from the HeNB 104 has a stronger signal level than the paging message (3) from the Macro eNB 102.

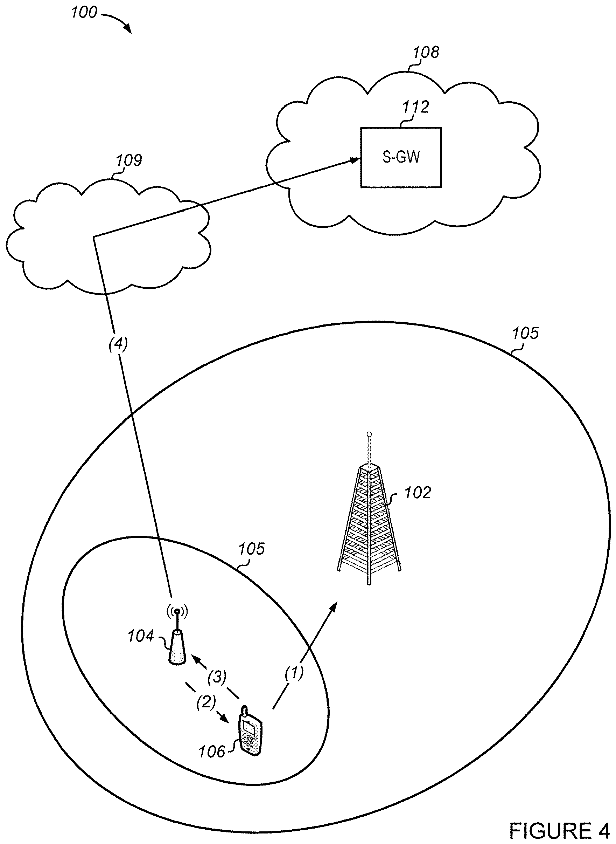

Referring now also to Figure 4, where an idle CSG UE 106 wants to initiate a session in the uplink, the CSG UE 106 sends a RACH message (1) to the Macro eNB 102. The Macro eNB 102 delays the connection establishment procedure by not granting the RACH request (step S224), for example by not responding to the RACH request (1). Using the RF energy of RACH signalling (1), the RF energy harvesting sensor can trigger the HeNB 104 wake-up (step S226), as this signal will be above a threshold level. Once the HeNB 104 is awake, it can transmit the Primary and Secondary Synchronisation Signals (PSS/SSS) (2) which will be received by the UE 106 at a much stronger level than those of the Macro eNB 102. The CSG UE 106 will connect to the HeNB 104 and attempt another RACH (3) to the S-GW 112 via the HeNB 104 (step S228). Although there may be a slight delay in providing the UE service request, the UE will get connection through HeNB 104 for the whole of the session, with much higher quality of service.

If a CSG UE moves away from the HeNB zone, the Macro can detect this through location updates. Then the Macro eNB will become the normal serving cell and offer un-checked uplink and downlink connectivity, when required. Similarly, if a CSG UE is moving into the zone of its HeNB coverage, the Macro eNB would detect this through location updates. The Macro eNB will continue to support the CSG UE if it is in the RRC connected mode. If the CSG UE is in the RRC idle mode and attempts a connection initiated either in the uplink or downlink, the macro eNB would make the RACH attempts repeat as described above and indirectly make the sleeping HeNB wake up.

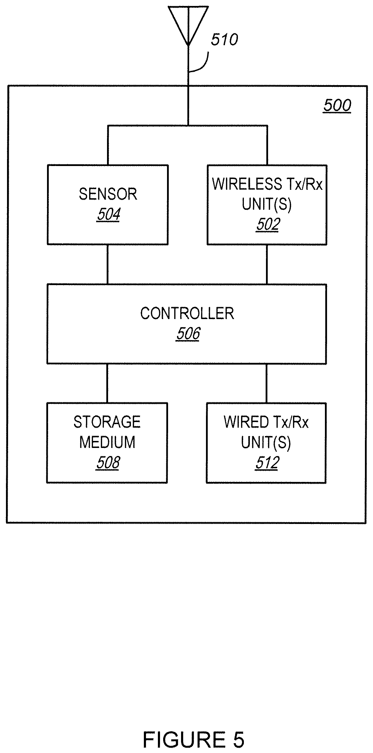

Figure 5 is a block diagram illustrating an embodiment of a small cell base station 500. The base station includes wireless transmitter/receiver unit(s) 502, which may be separate units, connected to at least one antenna 510 (together defining a communication unit) and a controller 506. The controller may be, for example, Microprocessor, DSP, ASIC, FPGA or other logic circuitry programmed or otherwise configured to perform the various functions described above, such as placing the base station 500 in a sleep mode and performing a wake-up procedure in response to detection of a signal by sensor 504. For example, the various functions described above may be embodied in the form of a computer program stored in the storage medium 508 and executed by the controller 506. The transmitter/receiver unit(s) 502 is responsible for wireless communication with mobile stations, including for example paging and synchronization signals, under the control of the controller 506. The wired transmitter/receiver unit(s) 512 is responsible for communication with the network and can be for example an ADSL line.

To summarise then, embodiments allow a small cell base station to be placed in a complete sleep mode (power down completely) when it is not required, and provide a protocol (i.e., extend existing RACH mechanisms) to enable triggering wake-up of the small cell base station. To that end, embodiments of the small cell base station are equipped with a passive sensor for harvesting energy from the radio waves of a mobile station trying to initiate communication with a macrocell base station. The radio waves activate the passive sensor and trigger the small cell base station to wake up (switch on). Embodiments can advantageously reduce energy consumption and EMF radiation levels associated with operation of small cell base stations. Furthermore, embodiments can eliminate the use of active (powered) circuitry to detect mobile station activity, and can avoid the need for the mobile station to be handed over from the macrocell base station where the Quality of Service provided by the macrocell base station to the mobile station before the handover is sub-optimal.

Embodiments can be provided in various wireless communications are in compliance with various wireless technologies, such as the Global System for Mobile communications (GSM) technology, General Packet Radio Service (GPRS) technology, Enhanced Data rates for Global Evolution (EDGE) technology, Wideband Code Division Multiple Access (WCDMA) technology, Code Division Multiple Access 2000 (CDMA 2000) technology, Time Division-Synchronous Code Division Multiple Access (TD-SCDMA) technology, Worldwide Interoperability for Microwave Access (WiMAX) technology, Long Term Evolution (LTE) technology, and others.

Although the blocks of flow charts are illustrated in a particular order, these blocks may where appropriate also be performed in parallel, and/or in a different order than those described herein. Also, the various blocks may be combined into fewer blocks, divided into additional blocks, and/or eliminated based upon the desired implementation. Furthermore, for the methods other processes disclosed herein, the flowchart shows functionality and operation of one possible implementation of present embodiments. In this regard, each block may represent a module, a segment, or a portion of program code, which includes one or more instructions executable by a processor for implementing specific logical functions or steps in the process. In addition, for the method and other processes disclosed herein, each block may represent circuitry that is wired to perform the specific logical functions in the process.

Although in embodiments described above triggering the wake-up procedure of the small cell base station involves harvesting radio frequency, RF, energy from one or more signals transmitted by the mobile station during the access attempt, alternatively triggering the wake-up procedure of the small cell base station can comprise: transmitting, by the wireless communications network to the small cell base station, a signal configured to trigger the wake-up procedure. The signal can be transmitted over a wired link (e.g., a backhaul) to the small cell base station. The signal can be transmitted when the wireless communications network determines that the small cell base station can better serve the mobile station, for example when a downlink connection to an idle mobile station in the coverage of the small cell base station is required, or when a mobile station that is connected to the macrocell base station has entered the coverage of the small cell base station. Accordingly, instead of steps S214 and S216 shown in Figure 2, the MME 110 of the network 108 can identify that the HeNB 104 in the sleep mode could better serve the UE 106 and send a wake-up signal through the wired connection (backhaul) to the HeNB 104.

Although in embodiments described above the base station is powered off completely when in sleep mode, alternatively entering the sleep mode can inclu powering off the RF part (including the antenna, transmitter and receiver) as well as the baseband part (including signal processor and microprocessor components) of the small cell base station. Typically, such processing parts consume between 60-70% of the power of the small cell base station.

While the invention has been described with reference to exemplary embodiments, it will be apparent to those skilled in the art that various modifications and variations can be made without departing from the scope of the appended claims. For instance, features illustrated or described as part of one embodiment can be used with another embodiment to yield a still further embodiment. Thus, it is intended that the present invention include such modifications and variations as come within the scope of the appended claims.

## Claims

1. A method of reducing power consumption of a small cell base station (104) that is integrated into a wireless communications network, the small cell base station (104) associated with a closed group of mobile stations (106) and located in a coverage area (103) of a macrocell base station (102) of the wireless communications network, the method comprising:
transmitting, by the small cell base station (104) to the wireless communications network, status information indicating that the small cell base station (104) is to enter a sleep mode in which no power is consumed, the small cell base station (104) entering the sleep mode either when no mobile stations (106) of the closed group are located in a coverage area (105) of the small cell base station (104) or when all mobile stations (106) of the closed group that are located in the coverage area (105) of the small cell base station (104) are in an idle mode; and
during an attempt by one of the mobile stations (106) to access the wireless communications network involving the macrocell base station (102) and occurring while the small cell base station (104) is in the sleep mode:
determining, by the wireless communications network, that the mobile station (106) is in the coverage area (105) of the small cell base station (104),
delaying (S224), by the wireless communications network, the access attempt, and
harvesting, by the small cell base station (104), radio frequency, RF, energy from one or more signals transmitted by the mobile station (106) during the access attempt, the harvested RF energy triggering (S226) a wake-up procedure of the small cell base station (104) in order for access to the wireless communications network to be granted to the mobile station (106) via the small cell base station (104).

2. The method according to claim 1, wherein the access attempt corresponds to a transition at the mobile station (106) from the idle mode to an active mode.

3. The method according to claim 1 or 2, wherein the access attempt comprises a random access procedure performed by the mobile station (106) to obtain radio resources from the macrocell base station (102) and triggered by a paging request received from the macrocell base station (102).

4. The method according to claim 1 or 2, wherein the access attempt comprises a random access procedure performed by the mobile station (106) to obtain radio resources from the macrocell base station (102) and triggered by the mobile station.

5. The method according to any one of the preceding claims, wherein delaying the access attempt comprises: denying, by the wireless communications network, a transmitted and subsequently retransmitted request for resources made by the mobile station (106).

6. The method according to claim 5, wherein the subsequently retransmitted request is transmitted at a higher power level compared to that of the transmitted request.

7. The method according to claim 5 or 6, further comprising setting a threshold level of RF energy for triggering the wake-up procedure such that the subsequently retransmitted request triggers the wake-up procedure.

8. The method according to any one of the preceding claims, wherein the access attempt comprises a random access channel procedure.

9. A wireless communications system, comprising:
a macrocell base station (102) of a wireless communications network; and
a small cell base station (104) that is integrated into the wireless communications network, the small cell base station (104) associated with a closed group of mobile stations (106) and located in a coverage area of the macrocell base station (102), said small cell base station (104) comprising a passive radio frequency, RF, energy harvesting sensor (504),
wherein the small cell base station (104) is configured to:
transmit, to the wireless communications network, status information indicating that the small cell base station (104) is to enter a sleep mode in which no power is consumed, the small cell base station (104) configured to enter the sleep mode either when no mobile stations (106) of the closed group are located in a coverage area of the small cell base station (104) or when all mobile stations (106) of the closed group that are located in the coverage area of the small cell base station (104) are in an idle mode,
while in the sleep mode, harvest by use of said passive RF energy harvesting sensor (504) radio frequency, RF, energy from one or more signals transmitted by one of the mobile stations (106) that is in the coverage area (105) of the small cell base station (104), the one or more signals relating to an attempt by the mobile station (106) to access the wireless communications network that involves the macrocell base station (102), and
wake up from the sleep mode in response to the harvested RF energy.

10. A small cell base station (104, 500) configured to be integrated into a wireless communications network in a coverage area (103) of a macrocell base station (102) of the wireless communications network, and configured to be associated with a closed group of mobile stations (106), the small cell base station (104, 500) comprising:
a transmitter (502) configured to transmit, to the wireless communications network, status information indicating that the small cell base station (104, 500) is to enter a sleep mode in which no power is consumed, the small cell base station (104, 500) configured to enter the sleep mode either when no mobile stations (106) of the closed group are located in a coverage area (105) of the small cell base station (104, 500) or when all mobile stations (106) of the closed group that are located in the coverage area of the small cell base station (104, 500) are in an idle mode; and
a passive radio frequency, RF, energy harvesting sensor (504) configured to, while in the sleep mode, harvest RF energy from one or more signals transmitted by one of the mobile stations (106) that is in the coverage area of the small cell base station (104, 500), the one or more signals relating to an attempt by the mobile station (106) to access the wireless communications network that involves the macrocell base station (102), and output a signal configured to trigger a wake-up procedure of the small cell base station (104, 500).

11. The small cell base station (104, 500) according to claim 10, wherein the passive RF energy harvesting sensor (504) has a threshold level of harvested RF energy for triggering the wake-up procedure that is set such that a retransmitted request for resources made by the mobile station (106) triggers the wake-up procedure.

## Patentansprüche

1. Verfahren zum Senken des Stromverbrauchs einer in ein Funkkommunikationsnetzwerk integrierten Kleinzell-Basisstation (104), wobei die Kleinzell-Basisstation (104) mit einer geschlossenen Gruppe von Mobilstationen (106) zugeordnet ist und sich in einem Abdeckungsbereich (103) einer Makrozellen-Basisstation (102) des Funkkommunikationsnetzwerks befindet, wobei das Verfahren umfasst:
Senden von Statusinformationen durch die Kleinzell-Basisstation (104) an das Funkkommunikationsnetzwerk, die anzeigen, dass die Kleinzell-Basisstation (104) in einen Schlafmodus schaltet, in welchem kein Strom verbraucht wird, wobei die Kleinzell-Basisstation (104) in den Schlafmodus entweder dann schaltet, wenn sich keine Mobilstationen (106) der geschlossenen Gruppe in einem Abdeckungsbereich (105) der Kleinzell-Basisstation (104) befinden, oder wenn alle Mobilstationen (106) der geschlossenen Gruppe, die sich im Abdeckungsbereich (105) der Kleinzell-Basisstation (104) befinden, in einem Ruhemodus sind; und
während eines Zugriffsversuchs durch eine der Mobilstationen (106) auf das Funkkommunikationsnetzwerk, der die Makrozellen-Basisstation (102) involviert und sich ereignet, während sich die Kleinzell-Basisstation (104) im Schlafmodus befindet:
Bestimmen durch das Funkkommunikationsnetzwerk, dass sich die Mobilstation (106) im Abdeckungsbereich (105) der Kleinzell-Basisstation (104) befindet,
Verzögern (S224) des Zugriffsversuchs durch das Funkkommunikationsnetzwerk, und
Ernten von Hochfrequenz-, radio frequency RF-, Energie aus einem oder mehreren während des Zugriffsversuchs von der Mobilstation (106) gesendeten Signalen durch die Kleinzell-Basisstation (104), wobei die geerntete RF-Energie eine Aufweckprozedur der Kleinzell-Basisstation (104) auslöst (S226), damit der Mobilstation (106) über die Kleinzell-Basisstation (104) Zugriff auf das Funkkommunikationsnetzwerk gewährt wird.

2. Verfahren nach Anspruch 1, wobei der Zugriffsversuch einem Übergang vom Ruhemodus in einen Aktivmodus an der Mobilstation (106) entspricht.

3. Verfahren nach Anspruch 1 oder 2, wobei der Zugriffsversuch eine Zufallszugriffprozedur umfasst, die von der Mobilstation (106) durchgeführt wird, um von der Makrozellen-Basisstation (102) Funkressourcen zu beziehen, und die durch eine von der Makrozellen-Basisstation (102) empfangene Funkrufanfrage ausgelöst wird.

4. Verfahren nach Anspruch 1 oder 2, wobei der Zugriffsversuch eine Zufallszugriffprozedur umfasst, die von der Mobilstation (106) durchgeführt wird, um von der Makrozellen-Basisstation (102) Funkressourcen zu beziehen, und die von der Mobilstation ausgelöst wird.

5. Verfahren nach einem der vorhergehenden Ansprüche, wobei das Verzögern des Zugriffsversuchs umfasst: Verweigern einer gesendeten und anschließend erneut gesendeten Anfrage nach Ressourcen, die von der Mobilstation (106) gestellt wird, durch das Funkkommunikationsnetzwerk.

6. Verfahren nach Anspruch 5, wobei die anschließend erneut gesendete Anfrage im Vergleich zur gesendeten Anfrage mit einer höheren Leistungsstärke gesendet wird.

7. Verfahren nach Anspruch 5 oder 6, ferner umfassend Einstellen einer Schwellenstärke der RF-Energie zum Auslösen der Aufweckprozedur derart, dass die anschließend erneut gesendete Anfrage die Aufweckprozedur auslöst.

8. Verfahren nach einem der vorhergehenden Ansprüche, wobei der Zugriffsversuch eine Random-Access-Channel- (Kanal mit wahlfreiem Zugriff) Prozedur umfasst.

9. Funkkommunikationssystem, umfassend:
eine Makrozellen-Basisstation (102) eines Funkkommunikationsnetzwerks; und
eine in das Funkkommunikationsnetzwerk integrierte Kleinzell-Basisstation (104), wobei die Kleinzell-Basisstation (104) einer geschlossenen Gruppe von Mobilstationen (106) zugeordnet ist und sich in einem Abdeckungsbereich der Makrozellen-Basisstation (102) befindet,
wobei die Kleinzell-Basisstation (104) einen passiven Hochfrequenz-, RF-, Energie-Erntesensor (504) umfasst, wobei die Kleinzell-Basisstation (104) dafür konfiguriert ist, um:
Statusinformationen an das Funkkommunikationsnetzwerk zu senden, die anzeigen, dass die Kleinzell-Basisstation (104) in einen Schlafmodus schaltet, in welchem kein Strom verbraucht wird, wobei die Kleinzell-Basisstation (104) dafür konfiguriert ist, in den Schlafmodus entweder dann zu schalten, wenn sich in einem Abdeckungsbereich der Kleinzell-Basisstation (104) keine Mobilstationen (106) der geschlossenen Gruppe befinden, oder wenn alle Mobilstationen (106) der geschlossenen Gruppe, die sich im Abdeckungsbereich der Kleinzellen-Basisstation (104) befinden, in einem Ruhemodus sind,
während sie sich im Schlafmodus befindet, unter Verwendung des passiven RF-Energie-Erntesensors (504) Hochfrequenz-, RF-, Energie aus einem oder mehreren Signalen zu ernten, die von einer der Mobilstationen (106) gesendet werden, die sich im Abdeckungsbereich (105) der Kleinzell-Basisstation (104) befindet, wobei das eine oder die mehreren Signale einen Zugriffsversuch auf das Funkkommunikationsnetzwerk durch die Mobilstation (106) betreffen, welcher die Makrozellen-Basisstation (102) involviert, und
in Antwort auf die geerntete RF-Energie aufzuwachen.

10. Kleinzell-Basisstation (104, 500), die dafür konfiguriert ist, in ein Funkkommunikationsnetzwerk in einem Abdeckungsbereich (103) einer Makrozellen-Basisstation (102) des Funkkommunikationsnetzwerks integriert zu sein, und dafür konfiguriert ist, einer geschlossenen Gruppe von Mobilstationen (106) zugeordnet zu sein, wobei die Kleinzell-Basisstation (104, 500) umfasst:
einen Transmitter (502), der dafür konfiguriert ist, Statusinformationen an das Funkkommunikationsnetzwerk zu senden, die anzeigen, dass die Kleinzell-Basisstation (104, 500) in einen Schlafmodus schaltet, in welchem kein Strom verbraucht wird, wobei die Kleinzell-Basisstation (104, 500) dafür konfiguriert ist, in den Schlafmodus entweder dann zu schalten, wenn sich keine Mobilstationen (106) der geschlossenen Gruppe in einem Abdeckungsbereich (105) der Kleinzell-Basisstation (104, 500) befinden, oder wenn alle Mobilstationen (106) der geschlossenen Gruppe, die sich im Abdeckungsbereich der Kleinzell-Basisstation (104, 500) befinden, in einem Ruhemodus sind; und
einen passiven Hochfrequenz-, RF-, Energie-Erntesensor (504), der dafür konfiguriert ist, während des Schlafmodus RF-Energie aus einem oder mehreren Signalen zu ernten, die von einer der Mobilstationen (106) gesendet werden, die sich im Abdeckungsbereich der Kleinzell-Basisstation (104, 500) befindet, wobei das eine oder die mehreren Signale einen Zugriffsversuch auf das Funkkommunikationsnetzwerk durch die Mobilstation (106) betreffen, welcher die Makrozellen-Basisstation (102) involviert, und ein Signal auszugeben, das dafür konfiguriert ist, eine Aufweckprozedur der Kleinzell-Basisstation (104, 500) auszulösen.

11. Kleinzell-Basisstation (104, 500) nach Anspruch 10, wobei der passive RF-Energie-Erntesensor (504) eine Schwellstärke geernteter RF-Energie zum Auslösen der Aufweckprozedur aufweist, die derart eingestellt ist, dass eine erneut gesendete Anfrage nach Ressourcen, die von der Mobilstation (106) gestellt wird, die Aufweckprozedur auslöst.

## Revendications

1. Procédé de réduction de consommation de puissance d'une station de base à petites cellules (104) qui est intégrée dans un réseau de communications sans fil, la station de base à petites cellules (104) étant associée à un groupe fermé de stations mobiles (106) et étant située dans une zone de couverture (103) d'une station de base à macrocellules (102) du réseau de communications sans fil, le procédé comprenant les étapes consistant à :
transmettre par l'intermédiaire de la station de base à petites cellules (104), au réseau de communications sans fil, des informations d'état indiquant que la station de base à petites cellules (104) va entrer dans un mode de veille dans lequel aucune puissance n'est consommée, la station de base à petites cellules (104) entrant dans le mode de veille lorsqu'aucune station mobile (106) du groupe fermé n'est située dans une zone de couverture (105) de la station de base à petites cellules (104), ou lorsque toutes les stations mobiles (106) du groupe fermé qui sont situées dans la zone de couverture (105) de la station de base à petites cellules (104) sont dans un mode inactif ; et
pendant une tentative par une des stations mobiles (106) d'accéder au réseau de communications sans fil impliquant la station de base à macrocellules (102), et survenant tandis que la station de base à petites cellules (104) est dans le mode de veille :
déterminer, par l'intermédiaire du réseau de communications sans fil, que la station mobile (106) est dans la zone de couverture (105) de la station de base à petites cellules (104) ;
retarder (S224), par l'intermédiaire du réseau de communications sans fil, la tentative d'accès, et
collecter, par l'intermédiaire de la station de base à petites cellules (104), de l'énergie radiofréquence, RF, à partir d'un ou plusieurs signaux transmis par la station mobile (106) pendant la tentative d'accès, l'énergie RF collectée déclenchant (S226) une procédure de réveil de la station de base à petites cellules (104) pour qu'un accès au réseau de communications sans fil soit garanti à la station mobile (106) via la station de base à petites cellules (104).

2. Procédé selon la revendication 1, dans lequel la tentative d'accès correspond à une transition au niveau de la station mobile (106) à partir du mode inactif vers un mode actif.

3. Procédé selon la revendication 1 ou 2, dans lequel la tentative d'accès comprend une procédure d'accès aléatoire réalisée par la station mobile (106) pour obtenir des ressources radio à partir de la station de base à macrocellules (102), et déclenchée par une requête d'appel radio reçue à partir de la station de base à macrocellules (102).

4. Procédé selon la revendication 1 ou 2, dans lequel la tentative d'accès comprend une procédure d'accès aléatoire effectuée par la station mobile (106) pour obtenir des ressources radio à partir de la station de base à macrocellules (102), et déclenchée par la station mobile.

5. Procédé selon l'une quelconque des revendications précédentes, dans lequel le retard de la tentative d'accès comprend l'étape consistant à : refuser, par le réseau de communications sans fil, une requête transmise et consécutivement retransmise concernant des ressources, formulée par la station mobile (106).

6. Procédé selon la revendication 5, dans lequel la requête consécutivement retransmise est transmise à un niveau de puissance plus élevé par comparaison à celui de la requête transmise.

7. Procédé selon la revendication 5 ou 6, comprenant en outre l'établissement d'un niveau de seuil d'énergie RF pour déclencher la procédure de réveil, de telle sorte que la requête consécutivement retransmise déclenche la procédure de réveil.

8. Procédé selon l'une quelconque des revendications précédentes, dans lequel la tentative d'accès comprend une procédure à canal d'accès aléatoire.

9. Système de communications sans fil, comprenant :
une station de base à macrocellules (102) d'un réseau de communications sans fil ; et
une station de base à petites cellules (104) qui est intégrée dans le réseau de communications sans fil, la station de base à petites cellules (104) étant associée à un groupe fermé de stations mobiles (106) et étant situés dans une zone de couverture de la station de base à macrocellules (102),
ladite station de base à petites cellules comprenant un capteur de collecte d'énergie radiofréquence, RF, passif (504),
dans lequel la station de base à petites cellules (104) est configurée pour :
transmettre, au réseau de communications sans fil, des informations d'état indiquant que la station de base à petites cellules (104) est destinée à un entrer dans un mode de veille dans lequel aucune puissance n'est consommée, la station de base à petites cellules (104) étant configurée pour entrer dans le mode de veille lorsqu'aucune station mobile (106) du groupe fermé n'est située dans une zone de couverture de la station de base à petites cellules (104), ou lorsque toutes les stations mobiles (106) du groupe fermé qui sont situées dans la zone de couverture de la station mobile de base à petites cellules (104) sont dans un mode inactif,
dans le mode de veille, collecter par l'utilisation dudit capteur de collecte d'énergie radiofréquence, RF, passif (504), de l'énergie radiofréquence, RF, à partir d'un ou de plusieurs signaux transmis par une des stations mobiles (106) qui est dans la zone de couverture (105) de la station de base à petites cellules (104), les un ou plusieurs signaux concernant une tentative par la station mobile (106) d'accéder au réseau de communications sans fil qui implique la station de base à macrocellules (102), et
se réveiller du mode de veille en réponse à l'énergie RF collectée.

10. Station de base à petites cellules (104, 500) configurée pour être intégrée dans un réseau de communications sans fil dans une zone de couverture (103) d'une station de base à macrocellules (102) du réseau de communications sans fil, et configurée pour être associée à un groupe fermé de stations mobiles (106), la station de base à petites cellules (104, 500) comprenant :
un transmetteur (502) configurs pour transmettre, au réseau de communications sans fil, des informations d'état indiquant que la station de base à petites cellules (104, 500) doit entrer dans un mode de veille dans lequel aucune puissance n'est consommée, la station de base à petites cellules (104, 500) étant configurée pour entrer dans le mode de veille lorsque aucune station mobile (106) du groupe fermé n'est située dans une zone de couverture (105) de la station de base à petites cellules (104, 500) ou lorsque toutes les stations mobiles (106) du groupe fermé qui sont situées dans la zone de couverture de la station de base à petites cellules (104, 500) sont dans un mode inactif ; et
un capteur de collecte d'énergie radiofréquence, RF, passif (504) configuré pour, dans le mode de veille, collecter de l'énergie RF à partir d'un ou plusieurs signaux transmis par l'une des stations mobiles (106) qui est dans la zone de couverture de la station de base à petites cellules (104, 500), les un ou plusieurs signaux concernant une tentative par la station mobile (106) d'accéder au réseau de communications sans fil qui implique la station de base à macrocellules (102), et de délivrer en sortie un signal configuré pour déclencher une procédure de réveil de la station de base à petites cellules (104, 500).

11. Station de base à petites cellules (104, 500) selon la revendication 10, dans lequel le capteur de collecte d'énergie RF passif (504) a un niveau de seuil d'énergie RF collectée pour déclencher la procédure de réveil qui est établi de telle sorte qu'une requête retransmise concernant des ressources, formulée par la station mobile (106), déclenche la procédure de réveil.
